# EUROPÄISCHE PATENTSCHRIFT

(11) **EP 3 078 557 B1**
(45) Veröffentlichungstag und Bekanntmachung des Hinweises auf die Patenterteilung: **11.08.2021**
(21) Anmeldenummer: 16154960.5
(22) Anmeldetag: 10.02.2016
(51) Int. Cl.: B60T 11/04, B60T 8/17, B60T 13/74

(54) **LÄNGENÄNDERUNGSELEMENT MIT PIEZOAKTOR UND FAHRZEUG MIT ABS-BREMSSYSTEM**
LENGTH CHANGING ELEMENT HAVING PIEZOELECTRIC ACTUATOR AND VEHICLE WITH ABS BRAKING SYSTEM
ÉLEMENT DE MODIFICATION DE LONGUEUR COMPRENANT UN PIEZOACTEUR ET VEHICULE DOTÉ D'UN SYSTÈME DE FREINAGE ABS

(30) Priorität: 10.04.2015 DE 102015206475
(43) Veröffentlichungstag der Anmeldung: 12.10.2016
(73) Patentinhaber: Robert Bosch GmbH, 70442 Stuttgart (DE)
(72) Erfinder: Flinspach, Gunter, 71229 Leonberg (DE); Koenig, Jens, 71706 Markgroeningen (DE); Meyer-Salfeld, Steffen, 71229 Leonberg (DE); Greiner, Rinaldo, 72762 Reutlingen (DE)

(56) Entgegenhaltungen:
- WO-A1-01/76940
- DE-A1-102012 222 048
- DE-A1-102013 213 413
- US-A- 4 952 835

## Beschreibung

### Stand der Technick

Die vorliegende Erfindung betrifft ein Seilzug einer Bremsanlage eines Fahrzeugs umfassend ein Längenänderungselement mit einem Piezoaktor. Ferner betrifft die vorliegende Erfindung ein Fahrzeug, insbesondere ein Elektrofahrrad, mit einem Antiblockiersystem (ABS).

Die DE 102013213413 A offenbart ein elektrisches Fahrrad mit einer Bremsanlage, wobei die Bremsanlage einen Seilzug mit einem Längenänderungselement umfasst.

Grundsätzlich sind ABS-Bremsanlagen auch bei Zweirädern, insbesondere auch bei Elektrofahrrädern, bekannt. Beispielsweise zeigt die DE102012222048A1 eine Steuereinheit zum Steuern eines Bremssystems eines Zweirads, welches einen Überschlag bei einem Bremsvorgang des Zweirads verhindern soll. Insbesondere für Elektrofahrräder haben sich bisher jedoch ABS-Bremsanlagen insbesondere aus Kostengründen noch nicht durchgesetzt bzw. sind noch nicht massentauglich. Insbesondere aus sicherheitstechnischen Aspekten wäre es allerdings wünschenswert, wenn eine Vielzahl von Zweirädern mit einem Antiblockiersystem ausgestattet werden könnte.

### Offenbarung der Erfindung

Der erfindungsgemäße Seilzug mit einem Längenänderungselement mit den Merkmalen des Anspruchs 1 weist demgegenüber den Vorteil auf, dass es einen kostengünstigen und einfachen sowie robusten Aufbau aufweist. Dadurch ist es geeignet, beispielsweise in Bremsanlagen von Zweirädern, insbesondere Elektrofahrrädern, verwendet zu werden. Erfindungsgemäß umfasst das Längenänderungselement einen Piezoaktor mit einem Aktorfuß und einem Aktorkopf. Das Längenänderungselement weist einen ersten und einen zweiten Endbereich auf, wobei der erste Endbereich mit dem Aktorkopf und der zweite Endbereich mit dem Aktorfuß verbunden ist. Ferner ist wenigstens ein erster Verbindungsarm vorgesehen, welcher den ersten Endbereich des Längenänderungselements mit dem zweiten Endbereich verbindet. Erfindungsgemäß wird dadurch erreicht, dass eine Auslenkung des ersten Verbindungsarms möglich ist, um eine Längenänderung des Längenänderungselements zu ermöglichen. Die Längenänderung kann dabei eine Verlängerung oder auch eine Verkürzung des Längenänderungselements sein. Dadurch ist das Längenänderungselement geeignet, in eine Bremsanlage integriert zu werden und insbesondere in ein Antiblockiersystem integriert zu werden.

Die Unteransprüche zeigen bevorzugte Weiterbildungen der Erfindung.

Vorzugsweise weist der erste Verbindungsarm einen Anschlussbereich zur Fixierung eines Gegenstands auf. Besonders bevorzugt ist das erfindungsgemäße Längenänderungselement in Verbindung mit einem Seilzug nutzbar, so dass am Anschlussbereich vorzugsweise ein Seilzug fixiert ist.

Der Anschlussbereich am ersten Verbindungsarm ist vorzugsweise in der Mitte des ersten Verbindungsarms angeordnet. Dadurch kann eine gleichmäßige Belastung des Längenänderungselements hinsichtlich Zugkräften und Druckkräften erreicht werden.

Bevorzugt ist der erste Verbindungsarm am ersten Endbereich an einem Anlenkpunkt fixiert und am zweiten Endbereich an einem zweiten Anlenkpunkt fixiert. Ferner ist der Anschlussbereich an einer ersten Seite einer den ersten und zweiten Anlenkpunkt umfassenden Linie angeordnet und der Piezoaktor des Längenänderungselements ist an einer der ersten Seite gegenüberliegenden zweiten Seite der Linie angeordnet. Dadurch kann bei Verwendung eines Seilzugs, welcher am Anschlussbereich fixiert ist, durch eine Längenänderung des Piezoaktors eine Verkürzung einer Seillänge erreicht werden.

Alternativ sind der Anschlussbereich und der Piezoaktor an einer zweiten Seite der Linie, welche den ersten und zweiten Anlenkpunkt verbindet, angeordnet. Dadurch kann ein Längenänderungselement realisiert werden, welches bei einer Längung des Piezoaktors eine Verkürzung bei Verwendung bei einem Seilzug ermöglicht.

Vorzugsweise weist der Piezoaktor einen Aufbau derart auf, dass eine Längenänderung des Piezoaktors nur am Aktorkopf ausgeführt wird. Dadurch kann der Aktorfuß ortsfest am Längenänderungselement verbleiben.

Gemäß einer weiteren bevorzugten Ausgestaltung der vorliegenden Erfindung ist der erste Verbindungsraum aus einem Material mit einer Eigenelastizität hergestellt, beispielsweise aus Federstahl oder aus Kunststoff. Nach einer erfolgten Auslenkung des Längenänderungselements durch den Piezoaktor erfolgt dadurch eine selbstständige Rückstellung des Längenänderungselements in eine Ausgangsposition. Dadurch muss kein Rückstellelement oder dgl. vorgesehen werden.

Weiter bevorzugt umfasst das Längenänderungselement einen zweiten Verbindungsarm, welcher am ersten Endbereich des Längenänderungselements an einem dritten Anlenkpunkt fixiert ist und am zweiten Endbereich des Längenänderungselements an einem vierten Anlenkpunkt fixiert ist. Der zweite Verbindungsarm ist dabei gegenüber dem ersten Verbindungsarm angeordnet. Dadurch kann beispielsweise ein Längenänderungselement realisiert werden, welches eine Trapezform mit einem Mittelbereich, an welchem der Piezoaktor angeordnet ist, aufweist. Das Längenänderungselement ist dabei bevorzugt symmetrisch zu einer Längsachse des Piezoaktors ausgebildet.

Die vorliegende Erfindung betrifft einen Seilzug einer Bremsanlage eines Fahrzeugs, welche einen ersten Seilbereich und ein erfindungsgemäßes Längenänderungselement umfasst, wobei das Längenänderungselement am Ende des ersten Seilbereichs angeordnet ist.

Besonders bevorzugt umfasst der Seilzug einen ersten Seilbereich und einen zweiten Seilbereich, wobei das Längenänderungselement zwischen dem ersten und zweiten Seilbereich angeordnet ist. Bevorzugt ist dabei der erste Seilbereich am ersten Anschlussbereich des Längenänderungselements angeordnet und der zweite Seilbereich am zweiten Anschlussbereich des Längenänderungselements angeordnet.

Ferner betrifft die vorliegende Erfindung ein mit Muskelkraft und Motorkraft antreibbares Fahrzeug, insbesondere ein Elektrofahrrad, umfassend einen elektrischen Antrieb, eine Stromversorgungseinheit und einen erfindungsgemäßen Seilzug.

Besonders bevorzugt ist dabei das Längenänderungselement am oder im elektrischen Antrieb des Fahrzeugs angeordnet. Besonders bevorzugt kann durch eine Integration des Längenänderungselements in den elektrischen Antrieb ein robuster und platzsparender Aufbau realisiert werden. Weiter bevorzugt ist der Piezoaktor des Längenänderungselements mit der Stromversorgung des Fahrzeugs verbunden. Dadurch kann eine sichere und einfache Stromversorgung des Piezoaktors realisiert werden.

Weiterhin umfasst bevorzugt das erfindungsgemäße Fahrzeug ferner eine Steuereinheit und einen Sensor zur Erfassung einer Drehzahl an einem Rad des Fahrzeugs. Die Steuereinheit ist dabei eingerichtet, bei einem Bremsvorgang des Fahrzeugs den Piezoaktor zu aktivieren, um eine Längenänderung des Längenänderungselements zu bewirken, wenn ein Rad des Fahrzeugs blockiert und die Blockade des Rades durch die Längenänderung des Längenänderungselements aufgehoben wird. Hierdurch kann eine einfache Antiblockiersystemsteuerung realisiert werden, welche einen Bremsvorgang des Fahrzeugs sicherer macht, insbesondere bei einem zweirädrigen Fahrzeug, insbesondere einem Elektrofahrrad.

Ferner ist am erfindungsgemäßen Fahrzeug ein Sensor zur Drehzahlerfassung an einem Hinterrad und/oder an einem Vorderrad angeordnet.

Weiterhin betrifft die vorliegende Erfindung eine Verwendung eines Längenänderungselements mit Piezoaktor in einer Seilzug-Bremsanlage eines Fahrzeugs.

### Zeichnung

Nachfolgend werden bevorzugte Ausführungsbeispiele der Erfindung unter Bezugnahme auf die begleitende Zeichnung im Detail beschrieben. In der Zeichnung sind gleiche bzw. funktional gleiche Teile mit den gleichen Bezugszeichen bezeichnet. In der Zeichnung ist:
- Figur 1: eine schematische Ansicht eines Elektrofahrrads mit einem erfindungsgemäßen Längenänderungselements gemäß einem ersten Ausführungsbeispiel der Erfindung,
- Figur 2: eine schematische, perspektivische Ansicht des Längenänderungselements des ersten Ausführungsbeispiels,
- Figur 3: eine schematische Seitenansicht des Längenänderungselements von Figur 2, und
- Figur 4: eine schematische Seitenansicht eines Längenänderungselements gemäß einem zweiten Ausführungsbeispiel der Erfindung.

### Ausführungsform der Erfindung

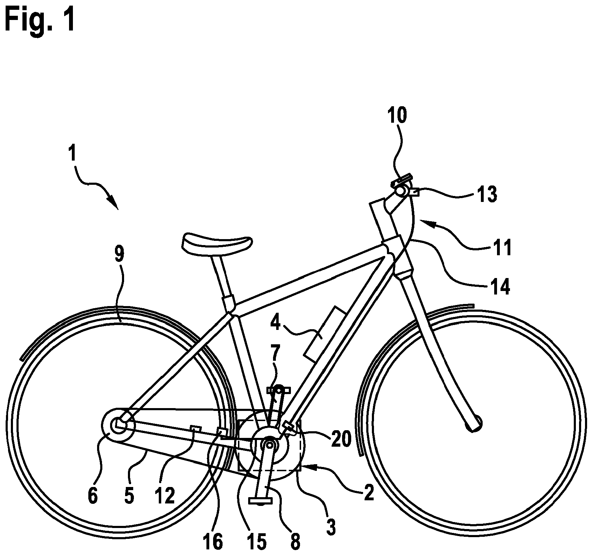

Nachfolgend wird unter Bezugnahme auf die Figuren 1 bis 3 ein Elektrofahrrad 1 mit einem Längenänderungselement 20 gemäß einem ersten bevorzugten Ausführungsbeispiel der Erfindung im Detail beschrieben.

Das Elektrofahrrad 1 umfasst einen Kurbeltrieb 2 und einen elektrischen Antrieb 3, welcher im Bereich des Kurbeltriebs 2 angeordnet ist. Das Elektrofahrrad 1 umfasst ferner eine Kette 5 sowie mehrere Ritzel 6 an einem Hinterrad 9. Das Bezugszeichen 4 bezeichnet eine Stromversorgungseinrichtung. Kurbeln des Kurbeltriebs 2 sind mit den Bezugszeichen 7 und 8 bezeichnet.

Der elektrische Antrieb 3 wird von der Stromversorgungseinrichtung 4 mit Strom versorgt. Am Lenker des Elektrofahrrads 1 ist ferner eine Steuereinheit 10 vorgesehen, welche mit dem elektrischen Antrieb 3 verbunden ist und diesen steuert. Die Stromversorgungseinrichtung 4 versorgt dabei die Steuereinheit 10 ebenfalls mit elektrischer Energie.

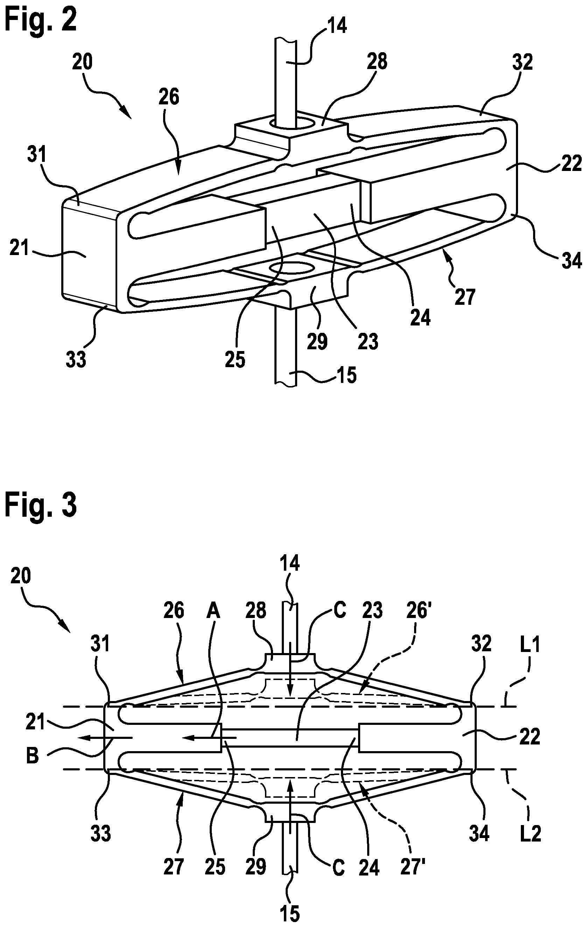

Die Figuren 2 und 3 zeigen das erfindungsgemäße Längenänderungselement 20. Wie insbesondere aus Figur 3 ersichtlich ist, weist das Längenänderungselement 20 in Seitenansicht eine Trapezform auf.

Das Längenänderungselement 20 umfasst einen ersten Endbereich 21 und einen zweiten Endbereich 22, zwischen welchen ein Piezoaktor 23 angeordnet ist. Der Piezoaktor 23 umfasst einen Aktorfuß 24 und einen Aktorkopf 25.

Ein erster Verbindungsarm 26 verbindet dabei den ersten Endbereich 21 mit dem zweiten Endbereich 22. Ein zweiter Verbindungsarm 27 verbindet ebenfalls den ersten Endbereich 21 mit dem zweiten Endbereich 22. Die Verbindungsarme sind dabei derart vorgesehen, dass in Seitenansicht in Ruhelage des Längenänderungselements 20 eine symmetrische Trapezform erhalten wird.

Am ersten Verbindungsarm 26 ist ein erster Anschlussbereich 28 zum Fixieren des ersten Seilbereichs 14 am Längenänderungselement 20 angeordnet. Der zweite Verbindungsarm 27 weist einen zweiten Anschlussbereich 29 zum Fixieren des zweiten Seilbereichs 15 am Längenänderungselement 20 auf.

Somit ist das Längenänderungselement 20 zwischen zwei Seilbereichen 14, 15 des Seilzugs einer Bremsanlage 11 des Elektrofahrrads angeordnet.

Die Bremsanlage 11 umfasst ferner einen Drehzahlsensor 12, welcher am Hinterrad 9 angeordnet ist. Ein Bremshebel 13 ist am Lenker in bekannter Weise vorgesehen, um die Hinterradbremse 16 zu betätigen. Vorzugsweise ist auch ein Drehzahlsensor am Vorderrad sowie ein Bremshebel für eine Vorderradbremse vorgesehen.

Wie insbesondere aus Figur 1 ersichtlich, ist das Längenänderungselement 20 in den elektrischen Antrieb 3 integriert. Eine Stromversorgung des Längenänderungselements 20 erfolgt dabei durch die Stromversorgungseinrichtung 4 des Elektrofahrrads.

Das Prinzip der Längenänderung des Längenänderungselements 20 wird nachfolgend unter Bezugnahme auf die Figuren 2 und 3 erläutert. In Figur 3 ist mit festen Umrisslinien die Ruhelage bzw. Ausgangsposition des Längenänderungselements 20 dargestellt und mit gestrichelten Linien eine Längenänderung des Längenänderungselements 20 eingezeichnet. In diesem Ausführungsbeispiel ist eine Längenänderung dabei eine Verkürzung des Längenänderungselements 2.

Die Längenänderung des Längenänderungselements 20 erfolgt dabei derart, dass bei einer Aktivierung des Piezoaktors 23 sich der Aktorkopf 25 in Richtung des Pfeils A verlängert. Durch die Verlängerung des Piezoaktors 23 ergibt sich auch eine Verlängerung des Längenänderungselements 20 in Richtung des Pfeils B, wie in Figur 3 eingezeichnet. Dadurch kommt das Längenänderungselement 20 von der in Figur 3 in durchgestrichenen Linien gezeichneten Ausgangsposition in die in Figur 3 gezeigte, in gestrichelten Linien dargestellte, verkürzte Position. Hierbei ist eine Position des ersten Verbindungsarms 26 mit dem Bezugszeichen 26' und eine Position des zweiten Verbindungsarms 27 mit dem Bezugszeichen 27' bezeichnet. Die beiden Verbindungsarme 26, 27 bewegen sich somit aufgrund einer Verlängerung des Piezoaktors 23 in Richtung zum Piezoaktor 23, was durch die Pfeile C angedeutet ist.

Wie aus Figur 3 ersichtlich ist, sind der erste Verbindungsarm 26 und der zweite Verbindungsarm 27 dabei an einer ersten Seite einer Linie L1, welche den ersten Anlenkpunkt 31 mit dem zweiten Anlenkpunkt 32 verbindet bzw. einer Linie L2, welche den dritten Anlenkpunkt 33 mit dem vierten Anlenkpunkt 34 verbindet, an einer vom Piezoaktor 23 abgewandten Seite angeordnet.

In der Bremsanlage 11 bedeutet dabei eine Verkürzung des Längenänderungselements 20 somit auch ein Anziehen des zweiten Seilbereichs 15 in Richtung zum ersten Seilbereich 14, so dass eine Bremskraft an der Hinterradbremse 16 reduziert wird, wenn die Bremse durch Zug gelöst wird.

Dadurch kann das erfindungsgemäße Längenänderungselement 20 in Verbindung mit einem Antiblockiersystem verwendet werden. Die Steuereinheit 10 ist dabei derart eingerichtet, dass bei Erfassen einer Radblockade am Hinterrad 9 mittels des Sensors 12, welcher beispielsweise ein Drehzahlsensor ist, die Steuereinheit 10 den Piezoaktor 23 betätigt, so dass eine Verkürzung des Längenänderungselements 20 auftritt. Dadurch wird die Bremskraft an der Hinterradbremse 16 reduziert, so dass eine Blockade des Hinterrads 9 beendet ist. Hierdurch kann nun ein Regelkreis aktiviert werden, da nun der Sensor 12 am Hinterrad 9 wieder eine Rotation des Hinterrads 9 erfasst. Dadurch kann die Steuereinheit 10 den Piezoaktor 23 wieder deaktivieren, so dass wieder eine Verlängerung des Seilzuges auftritt, da das Längenänderungselement 20 aufgrund seiner vorhandenen Eigenelastizität wieder in seine in Figur 2 gezeigte Ausgangslage zurückkehrt.

Somit kann durch ein kostengünstiges Längenänderungselement 20 in einem Seilzug ein Antiblockiersystem für ein Elektrofahrrad 1 realisiert werden. Dabei ist das Längenänderungselement 20 sehr kompakt aufgebaut und kann bevorzugt in den elektrischen Antrieb 3 integriert werden. Somit ist es möglich, dass eine Massenausrüstung von Elektrofahrrädern mit Antiblockiersystemen auf kostengünstige und kompakte Weise ermöglicht wird.

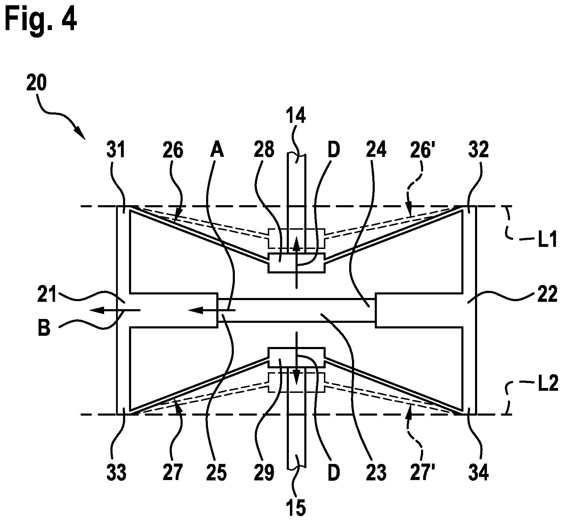

Figur 4 zeigt ein Längenänderungselement 20 gemäß einem zweiten Ausführungsbeispiel der Erfindung. Beim zweiten Ausführungsbeispiel der Erfindung erfolgt bei einer Längung des Piezoaktors 23 eine Verlängerung des Längenänderungselements 20. Dies ist dadurch realisiert, dass der erste Verbindungsarm 26 und der zweite Verbindungsarm 27 an einer zweiten Seite der die Anlenkpunkte verbindenden Linien L1 und L2 angeordnet sind. Dadurch erfolgt bei einer Längung des Piezoaktors 23 auch eine Verlängerung des Seilzugs, da die ersten und zweiten Anschlussbereiche 28, 29, wie in Figur 4 durch die Pfeile D angedeutet, in Richtung weg vom Piezoaktor 23 bewegt werden. Somit kann auch eine Verlängerung des Seilzugs auf einfache Weise realisiert werden. In Figur 4 ist wiederum die ausgelenkte Position des Längenänderungselements 20 in gestrichelten Linien eingezeichnet.

Durch die erfindungsgemäße Verwendung der Verbindungsarme 26, 27 ergibt sich somit auch eine Wegübersetzung des Hubs des Piezoaktors 23 von einigen Millimetern, wie aus den Figuren 3 und 4 ersichtlich ist. Üblicherweise beträgt beispielsweise eine Verlängerung des Piezoaktors 23 bei Aktivierung von ca. 35 bis 60 µm. Da der Piezoaktor 23 nur eine sehr kleine elektrische Leistungsaufnahme aufweist, wird insbesondere eine Reichweite eines Elektrofahrrads nicht wesentlich reduziert. Ferner kann mittels des Piezoaktors 23 eine sehr exakte und schnelle Längenänderung des Längenänderungselements 20 vorgenommen werden, so dass die Steuereinheit 10 eine sehr gute ABS-Regelung realisieren kann.

## Patentansprüche

1. Seilzug für eine Bremsanlage eines Fahrzeugs, insbesondere eines Elektrofahrrads, umfassend einen ersten Seilbereich (14) und ein Längenänderungselement (20), welches am ersten Seilbereich (14) angeordnet ist,
wobei das Längenänderungselement (20)
- einen Piezoaktor (23) mit einem Aktorfuß (24) und einem Aktorkopf (25),
- einen ersten Endbereich (21) und einen zweiten Endbereich (22),
- wobei der erste Endbereich (21) mit dem Aktorkopf (25) und der zweite Endbereich (22) mit dem Aktorfuß (24) verbunden ist, und
- wenigstens einen ersten Verbindungsarm (26), welcher den ersten Endbereich (21) mit dem zweiten Endbereich (22) verbindet umfasst.

2. Seilzug nach Anspruch 1, **dadurch gekennzeichnet, dass** der erste Verbindungsarm (26) einen ersten Anschlussbereich (28) zur Fixierung eines Gegenstands aufweist.

3. Seilzug nach Anspruch 2, **dadurch gekennzeichnet, dass** der erste Anschlussbereich (28) in der Mitte des ersten Verbindungsarms (26) angeordnet ist.

4. Seilzug nach einem der vorhergehenden Ansprüche 2 bis 3, **dadurch gekennzeichnet, dass** der erste Verbindungsarm (26) am ersten Endbereich (21) an einem ersten Anlenkpunkt (31) fixiert ist und am zweiten Endbereich (22) an einem zweiten Anlenkpunkt (32) fixiert ist und der erste Anschlussbereich (28) an einer ersten Seite einer den ersten und zweiten Anlenkpunkt verbindenden Linie (L1) angeordnet ist und der Piezoaktor (23) an einer der ersten Seite entgegengesetzten zweiten Seite der ersten Linie (L1) angeordnet ist.

5. Seilzug nach Anspruch 4, **dadurch gekennzeichnet, dass** der erste Anschlussbereich (28) und der Piezoaktor (23) beide an der zweiten Seite der Linie (L1) angeordnet sind.

6. Seilzug nach einem der vorhergehenden Ansprüche, **dadurch gekennzeichnet, dass** der Piezoaktor (23) eine Längenänderung ausschließlich am Aktorkopf (25) ausführt.

7. Seilzug nach einem der vorhergehenden Ansprüche, **dadurch gekennzeichnet, dass** der erste Verbindungsarm (26) aus einem Material mit Eigenelastizität, insbesondere Federstahl oder Kunststoff, hergestellt ist und sich nach einer erfolgten Auslenkung durch den Piezoaktor (23) aus einer Ausgangslage wieder selbstständig in die Ausgangslage zurückstellt.

8. Seilzug nach einem der vorhergehenden Ansprüche, **gekennzeichnet durch** einen zweiten Verbindungsarm (27), welcher den ersten Endbereich (21) mit dem zweiten Endbereich (22) verbindet und welcher am ersten Endbereich (21) an einem dritten Anlenkpunkt (33) fixiert ist und am zweiten Endbereich (22) an einem vierten Anlenkpunkt (34) fixiert ist.

9. Seilzug nach Anspruch 1, ferner umfassend einen zweiten Seilbereich (15), wobei das Längenänderungselement (20) zwischen dem ersten Seilbereich (14) und dem zweiten Seilbereich (15) angeordnet ist.

10. Mit Muskelkraft und Motorkraft antreibbares Fahrzeug, insbesondere Elektrofahrrad, umfassend einen elektrischen Antrieb (3), eine Stromversorgungseinrichtung (4) und einen Seilzug nach einem der Ansprüche 1 bis 9.

11. Fahrzeug nach Anspruch 12, **dadurch gekennzeichnet, dass** das Längenänderungselement (20) am elektrischen Antrieb (3) angeordnet ist oder in den elektrischen Antrieb (3) integriert ist.

12. Fahrzeug nach Anspruch 10 oder 11, **dadurch gekennzeichnet, dass** der Piezoaktor (23) des Längenänderungselements (20) mit der Stromversorgungseinrichtung (4) verbunden ist.

13. Fahrzeug nach einem der Ansprüche 10 bis 12, ferner umfassend eine Steuereinheit (10) und einen Sensor (12) zur Erfassung einer Drehzahl eines Rades des Fahrzeugs, wobei die Steuereinheit (10) eingerichtet ist, bei einem Bremsvorgang des Fahrzeugs und einer gleichzeitigen Blockade des Rades den Piezoaktor (23) zu aktivieren, um eine Längenänderung des Längenänderungselements (20) zu bewirken, so dass die Blockade des Rades aufgehoben wird.

14. Fahrzeug nach Anspruch 13, **dadurch gekennzeichnet, dass** ein Sensor (12) zur Drehzahlerfassung an einem Hinterrad und/oder einem Vorderrad des Fahrzeugs angeordnet ist.

## Claims

1. Operating cable for a brake system of a vehicle, in particular an electric bicycle, comprising a first cable region (14) and a length changing element (20), which is arranged on the first cable region (14), wherein the length changing element (20) comprises
- a piezo actuator (23) with an actuator foot (24) and an actuator head (25),
- a first end region (21) and a second end region (22),
- wherein the first end region (21) is connected to the actuator head (25) and the second end region (22) is connected to the actuator foot (24), and
- at least one first connecting arm (26), which connects the first end region (21) to the second end region (22).

2. Operating cable according to Claim 1, **characterized in that** the first connecting arm (26) has a first connection region (28) for fixing an object.

3. Operating cable according to Claim 2, **characterized in that** the first connection region (28) is arranged in the middle of the first connecting arm (26).

4. Operating cable according to either of the preceding Claims 2 and 3, **characterized in that** the first connecting arm (26) is fixed on the first end region (21) at a first articulating point (31) and is fixed on the second end region (22) at a second articulating point (32) and the first connection region (28) is arranged on a first side of a line (L1) connecting the first articulating point and the second articulating point, and the piezo actuator (23) is arranged on a second side of the first line (L1), opposite from the first side.

5. Operating cable according to Claim 4, **characterized in that** the first connection region (28) and the piezo actuator (23) are both arranged on the second side of the line (L1).

6. Operating cable according to one of the preceding claims, **characterized in that** the piezo actuator (23) performs a change of length exclusively at the actuator head (25).

7. Operating cable according to one of the preceding claims, **characterized in that** the first connecting arm (26) is produced from a material with intrinsic elasticity, in particular spring steel or plastic, and, after a deflection by the piezo actuator (23) from an initial position has taken place, returns again into the initial position of its own accord.

8. Operating cable according to one of the preceding claims, **characterized by** a second connecting arm (27), which connects the first end region (21) to the second end region (22) and which is fixed on the first end region (21) at a third articulating point (33) and is fixed on the second end region (22) at a fourth articulating point (34).

9. Operating cable according to Claim 1, also comprising a second cable region (15), wherein the length changing element (20) is arranged between the first cable region (14) and the second cable region (15).

10. Vehicle that can be driven by muscle power and motor power, in particular an electric bicycle, comprising an electrical drive (3), a power supplying device (4) and an operating cable according to one of Claims 1 to 9.

11. Vehicle according to Claim 12, **characterized in that** the length changing element (20) is arranged on the electrical drive (3) or is integrated in the electrical drive (3).

12. Vehicle according to Claim 10 or 11, **characterized in that** the piezo actuator (23) of the length changing element (20) is connected to the power supplying device (4).

13. Vehicle according to one of Claims 10 to 12, also comprising a control unit (10) and a sensor (12) for sensing a rotational speed of a wheel of the vehicle, wherein the control unit (10) is designed to activate the piezo actuator (23) in the event of a braking operation of the vehicle and a simultaneous locking of the wheel, in order to bring about a change of length of the length changing element (20), so that the locking of the wheel is ended.

14. Vehicle according to Claim 13, **characterized in that** a sensor (12) for sensing the rotational speed is arranged on a rear wheel and/or a front wheel of the vehicle.

## Revendications

1. Câble Bowden pour un système de freinage d'un véhicule, en particulier d'un vélo électrique, comportant une première région de câble (14) et un élément de modification de longueur (20), lequel est disposé au niveau de la première région de câble (14), l'élément de modification de longueur (20) comportant
- un actionneur piézoélectrique (23) doté d'un pied d'actionneur (24) et d'une tête d'actionneur (25),
- une première région d'extrémité (21) et une deuxième région d'extrémité (22),
- la première région d'extrémité (21) étant reliée à la tête d'actionneur (25) et la deuxième région d'extrémité (22) étant reliée au pied d'actionneur (24), et
- au moins un premier bras de liaison (26), lequel relie la première région d'extrémité (21) à la deuxième région d'extrémité (22).

2. Câble Bowden selon la revendication 1, **caractérisé en ce que** le premier bras de liaison (26) comprend une première région de raccordement (28) pour la fixation d'un objet.

3. Câble Bowden selon la revendication 2, **caractérisé en ce que** la première région de raccordement (28) est disposée au centre du premier bras de liaison (26).

4. Câble Bowden selon l'une des revendications 2 et 3, **caractérisé en ce que** le premier bras de liaison (26) est fixé à la première région d'extrémité (21) en un premier point d'articulation (31) et est fixé à la deuxième région d'extrémité (22) en un deuxième point d'articulation (32) et la première région de raccordement (28) est disposée sur un premier côté d'une ligne (L1) reliant le premier et le deuxième point d'articulation et l'actionneur piézoélectrique (23) est disposé sur un deuxième côté, opposé au premier côté, de la première ligne (L1).

5. Câble Bowden selon la revendication 4, **caractérisé en ce que** la première région de raccordement (28) et l'actionneur piézoélectrique (23) sont tous deux disposés sur le deuxième côté de la ligne (L1).

6. Câble Bowden selon l'une des revendications précédentes, **caractérisé en ce que** l'actionneur piézoélectrique (23) effectue une modification de longueur exclusivement au niveau de la tête d'actionneur (25) .

7. Câble Bowden selon l'une des revendications précédentes, **caractérisé en ce que** le premier bras de liaison (26) est fabriqué à partir d'un matériau présentant une élasticité propre, en particulier à partir d'acier à ressorts ou de matière synthétique, et revient de manière autonome à la position initiale après qu'une déviation par l'actionneur piézoélectrique (23) à partir d'une position initiale a été effectuée.

8. Câble Bowden selon l'une des revendications précédentes, **caractérisé par** un deuxième bras de liaison (27), lequel relie la première région d'extrémité (21) à la deuxième région d'extrémité (22) et lequel est fixé à la première région d'extrémité (21) en un troisième point d'articulation (33) et est fixé à la deuxième région d'extrémité (22) en un quatrième point d'articulation (34) .

9. Câble Bowden selon la revendication 1, comportant en outre une deuxième région de câble (15), l'élément de modification de longueur (20) étant disposé entre la première région de câble (14) et la deuxième région de câble (15).

10. Véhicule pouvant être entraîné par une force musculaire et par une force de moteur, en particulier vélo électrique, comportant un entraînement électrique (3), un dispositif d'alimentation en courant (4) et un câble Bowden selon l'une des revendications 1 à 9.

11. Véhicule selon la revendication 12, **caractérisé en ce que** l'élément de modification de longueur (20) est disposé au niveau de l'entraînement électrique (3) ou est intégré dans l'entraînement électrique (3).

12. Véhicule selon la revendication 10 ou 11, **caractérisé en ce que** l'actionneur piézoélectrique (23) de l'élément de modification de longueur (20) est relié au dispositif d'alimentation en courant (4).

13. Véhicule selon l'une des revendications 10 à 12, comportant en outre une unité de commande (10) et un capteur (12) servant à la détection d'une vitesse de rotation d'une roue du véhicule, l'unité de commande (10) étant conçue pour activer l'actionneur piézoélectrique (23) en cas d'opération de freinage du véhicule et de blocage simultané de la roue, afin de provoquer une modification de longueur de l'élément de modification de longueur (20), de sorte que le blocage de la roue soit supprimé.

14. Véhicule selon la revendication 13, **caractérisé en ce qu'**un capteur (12) servant à la détection de la vitesse de rotation est disposé au niveau d'une roue arrière et/ou d'une roue avant du véhicule.
